(19) Europäisches Patentamt
European Patent Office
Office européen des brevets

(11) EP 4 159 685 A1

(12) EUROPEAN PATENT APPLICATION
published in accordance with Art. 153(4) EPC

(43) Date of publication:
05.04.2023 Bulletin 2023/14

(21) Application number: 21813655.4

(22) Date of filing: 20.04.2021

(51) International Patent Classification (IPC):
C01G 53/00 (2006.01)    H01M 4/36 (2006.01)
H01M 4/525 (2010.01)

(52) Cooperative Patent Classification (CPC):
C01G 53/00; H01M 4/36; H01M 4/525; Y02E 60/10

(86) International application number:
PCT/JP2021/015956

(87) International publication number:
WO 2021/241075 (02.12.2021 Gazette 2021/48)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 29.05.2020 JP 2020094156

(71) Applicant: Panasonic Intellectual Property Management Co., Ltd.
Osaka-shi, Osaka 540-6207 (JP)

(72) Inventors:
• INOUE Katsuya
  Osaka-shi, Osaka 540-6207 (JP)
• OGASAWARA Takeshi
  Osaka-shi, Osaka 540-6207 (JP)
• AOKI Yoshinori
  Osaka-shi, Osaka 540-6207 (JP)

(74) Representative: Novagraaf International SA
Chemin de l'Echo 3
1213 Onex, Geneva (CH)

(54) POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY

(57) A positive electrode active material for nonaqueous electrolyte secondary batteries comprises a lithium transition metal composite oxide that has secondary particles each formed from aggregated primary particles and a surface modification layer that is formed on the surface of each of the primary particles of the lithium transition metal composite oxide, in which the lithium transition metal composite oxide contains at least Al and Ni in an amount of 80 mol% or more relative to the total number of moles of metal elements excluding Li, the surface modification layer contains W and at least one of Sr and Ca, and the content of W in the surface modification layer is 0.075 mol% or less relative to the total number of moles of the metal elements excluding Li in the lithium transition metal composite oxide.

Figure 1

**Description**

TECHNICAL FIELD

The present disclosure relates to a positive electrode active material for a non-aqueous electrolyte secondary battery and a non-aqueous electrolyte secondary battery.

BACKGROUND ART

In recent years, non-aqueous electrolyte secondary batteries that comprise a positive electrode, a negative electrode, and a non-aqueous electrolyte, and that move Li ions and the like between the positive electrode and the negative electrode to perform charge and discharge have been commonly used as secondary batteries with high output and high capacity. From the viewpoints of lower resistance, higher capacity, and the like of the battery, a positive electrode active material included in the positive electrode of the battery has been required to have improved characteristics.

For example, Patent Literature 1 discloses a lithium-metal composite oxide in which a tungsten-lithium-containing compound is formed on surfaces of primary particles as a positive electrode active material that yields a battery having low resistance and high capacity.

CITATION LIST

PATENT LITERATURE

PATENT LITERATURE 1: Japanese Unexamined Patent Application Publication No. 2016-225275

SUMMARY

In a lithium-transition metal composite oxide included in a positive electrode active material, a design of increasing a content rate of Ni is considered to obtain a high discharge capacity. However, when the proportion of Ni is 80 mol% or more based on the total number of moles of metal elements excluding Li, a layered structure of the lithium-transition metal composite oxide becomes unstable, resulting in lowering of battery capacity with a charge-discharge cycle in some cases. The lowering of the battery capacity with a charge-discharge cycle is not considered in the art in Patent Literature 1, and the art still has room for improvement.

A positive electrode active material for a non-aqueous electrolyte secondary battery of an aspect of the present disclosure includes: a lithium-transition metal composite oxide having secondary particles formed by aggregation of primary particles; and a surface-modified layer formed on surfaces of the primary particles of the lithium-transition metal composite oxide, wherein the lithium-transition metal composite oxide contains at least: 80 mol% or more of Ni based on a total number of moles of metal elements excluding Li; and Al, the surface-modified layer contains at least one of the group consisting of Sr and Ca, and W, and a content of W in the surface-modified layer is 0.075 mol% or less based on the total number of moles of the metal elements excluding Li in the lithium-transition metal composite oxide.

A non-aqueous electrolyte secondary battery of an aspect of the present disclosure comprises: a positive electrode including the above positive electrode active material for a non-aqueous electrolyte secondary battery; a negative electrode; and a non-aqueous electrolyte.

According to the positive electrode active material for a non-aqueous electrolyte secondary battery of an aspect of the present disclosure, a non-aqueous electrolyte secondary battery having high output and improved charge-discharge cycle characteristics may be provided.

BRIEF DESCRIPTION OF DRAWING

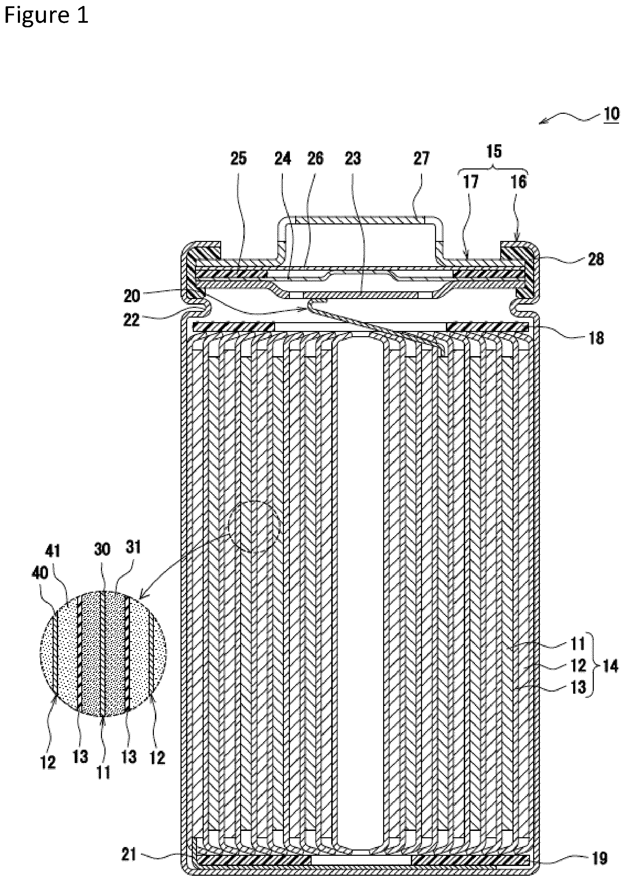

FIG. 1 is a sectional view of a non-aqueous electrolyte secondary battery of an example of an embodiment.

DESCRIPTION OF EMBODIMENTS

A layered structure of the lithium-transition metal composite oxide has a transition metal layer such as Ni, a Li layer, and an oxygen layer. Li ions present in the Li layer are reversibly abstracted and inserted to proceed charge and discharge reactions of the battery. In the lithium-transition metal composite oxide included in the positive electrode active material, when a proportion of Ni based on a total number of moles of metal elements excluding Li is 80% or more, many Li ions are abstracted from the Li layer during the charge of the battery to destabilize the layered structure in some cases. On a surface of the lithium-transition metal composite oxide with the destabilized layered structure, a transformed layer is formed by a reaction with an electrolyte. Since the structural change of the lithium-transition metal composite oxide further proceeds from the transformed layer, the battery capacity gradually lowers with charges and discharges.

The present inventors have made intensive investigation to solve the above problem, and consequently found that forming a surface-modified layer containing at least one of the group consisting of Sr and Ca, and W on a surface of the lithium-transition metal composite oxide improves the charge-discharge cycle characteristics and output characteristics of the battery with a synergistic effect of Sr or Ca and W. It is presumed that W facilitates the move of Li ions between the electrolyte liquid and the lithium-transition metal composite oxide, and an electronic interaction with Sr or Ca present stabilizes the surface state of the lithium-transition metal composite oxide, resulting in specific inhibition of the formation of the transformed layer. If the content of W in the surface-modified layer is more than 0.075 mol% based on the total number of moles of the metal elements excluding Li in the lithium-transition metal composite oxide, the surface-modified layer becomes too thick, and a reaction resistance is increased, resulting in deterioration of output characteristics.

Hereinafter, an example of embodiments of the non-aqueous electrolyte secondary battery according to the present disclosure will be described in detail. Hereinafter, a cylindrical battery in which a wound electrode assembly is housed in a cylindrical battery case will be exemplified, but the electrode assembly is not limited to a wound electrode assembly, and may be a laminated electrode assembly in which a plurality of positive electrodes and a plurality of negative electrodes are alternately stacked one by one with a separator interposed therebetween. The battery case is not limited to a cylindrical battery case, and may be, for example, a rectangular battery case, a coin-shaped battery case, or a battery case composed of laminated sheets including a metal layer and a resin layer.

FIG. 1 is a sectional view of a non-aqueous electrolyte secondary battery 10 of an example of an embodiment. As exemplified in FIG. 1, the non-aqueous electrolyte secondary battery 10 comprises an electrode assembly 14, a non-aqueous electrolyte, and a battery case 15 housing the electrode assembly 14 and the non-aqueous electrolyte. The electrode assembly 14 has a wound structure in which a positive electrode 11 and a negative electrode 12 are wound with a separator 13 interposed therebetween. The battery case 15 is composed of a bottomed cylindrical exterior housing can 16 and a sealing assembly 17 sealing an opening of the exterior housing can 16.

The electrode assembly 14 is composed of the elongated positive electrode 11, the elongated negative electrode 12, two elongated separators 13, a positive electrode tab 20 bonded to the positive electrode 11, and a negative electrode tab 21 bonded to the negative electrode 12. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The two separators 13 are formed to be one size larger than at least the positive electrode 11, and disposed to, for example, sandwich the positive electrode 11.

The non-aqueous electrolyte secondary battery 10 comprises insulating plates 18 and 19 disposed on the upper and lower sides of the electrode assembly 14, respectively. In the example illustrated in FIG. 1, the positive electrode tab 20 attached to the positive electrode 11 extends through a through hole in the insulating plate 18 toward a side of the sealing assembly 17, and the negative electrode tab 21 attached to the negative electrode 12 extends along an outside of the insulating plate 19 toward the bottom side of the exterior housing can 16. The positive electrode tab 20 is connected to a lower surface of a bottom plate 23 of the sealing assembly 17 by welding or the like, and a cap 27 of the sealing assembly 17 electrically connected to the bottom plate 23 becomes a positive electrode terminal. The negative electrode tab 21 is connected to a bottom inner surface of the exterior housing can 16 by welding or the like, and the exterior housing can 16 becomes a negative electrode terminal.

The exterior housing can 16 is, for example, a bottomed cylindrical metallic container. A gasket 28 is provided between the exterior housing can 16 and the sealing assembly 17 to seal the inside space of the battery case 15. The exterior housing can 16 has a groove 22 that is formed by, for example, pressing a side wall thereof from the outside and that supports the sealing assembly 17. The groove 22 is preferably formed in a circular shape along a circumferential direction of the exterior housing can 16, and supports the sealing assembly 17 with the upper surface thereof.

The sealing assembly 17 has a structure having the bottom plate 23, a lower vent member 24, an insulating member 25, an upper vent member 26, and the cap 27, which are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective central parts thereof, and the insulating member 25 is interposed between the respective circumferential parts of the vent members 24 and 26. If the internal pressure of the battery increases due to abnormal heat generation, the lower vent member 24 is deformed so as to push the upper vent member 26 toward the cap 27 side and breaks, resulting in cutting off of an electrical pathway between the lower vent member 24 and the upper vent member 26. If the internal pressure further increases, the upper vent member 26 breaks, and gas is discharged through the opening of the cap 27.

Hereinafter, the positive electrode 11, the negative electrode 12, the separator 13, and the non-aqueous electrolyte, which constitute the non-aqueous electrolyte secondary battery 10, particularly a positive electrode active material included in a positive electrode mixture layer 31 constituting the positive electrode 11, will be described in detail.

[Positive Electrode]

The positive electrode 11 has a positive electrode current collector 30 and the positive electrode mixture layer 31 formed on both surfaces of the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used. The positive electrode mixture layer 31 may include the positive electrode active material, a conductive agent, and a binder. A thickness of the positive electrode mixture layer 31 is, for example, 10 $\mu$m to 150 $\mu$m on one side of the positive electrode current collector 30. The positive electrode 11 may be produced by, for example, applying a positive electrode slurry including the positive electrode active material, the conductive agent, the binder, and the like on the surface of the positive electrode current collector 30, drying and subsequently compressing the applied film to form the positive electrode mixture layers 31 on both the surfaces of the positive electrode current collector 30.

Examples of the conductive agent included in the positive electrode mixture layer 31 may include a carbon material such as carbon black, acetylene black, Ketjenblack, and graphite. Examples of the binder included in the positive electrode mixture layer 31 may include a fluororesin such as polytetrafluoroethylene (PTFE) and polyvinylidene fluoride (PVdF), polyacrylonitrile (PAN), a polyimide, an acrylic resin, and a polyolefin. With these resins, carboxymethylcellulose (CMC) or a salt thereof, polyethylene oxide (PEO), and the like may be used in combination.

The positive electrode active material included in the positive electrode mixture layer 31 include: a lithium-transition metal composite oxide having secondary particles formed by aggregation of primary particles; and a surface-modified layer formed on surfaces of the primary particles of the lithium-transition metal composite oxide. The surface-modified layer inhibits a side reaction between the lithium-transition metal composite oxide and the electrolyte liquid to inhibit generation of a transformed layer. Here, the surface-modified layer being formed on the surfaces of the primary particles means the surface-modified layer being present on surfaces of the secondary particles or on boundaries where the primary particles are contacted with each other.

The secondary particles of the lithium-transition metal composite oxide are particles having a median diameter (D50) on a volumetric basis of preferably 3 $\mu$m to 30 $\mu$m, more preferably 5 $\mu$m to 25 $\mu$m, particularly preferably 7 $\mu$m to 15 $\mu$m. The D50, also referred to as a median diameter, means a particle diameter at which a cumulative frequency is 50% from a smaller particle diameter side in a particle size distribution on a volumetric basis. The particle size distribution of the secondary particles of the lithium-transition metal composite oxide may be measured by using a laser diffraction-type particle size distribution measuring device (for example, MT3000II, manufactured by MicrotracBEL Corp.) with water as a dispersion medium.

A particle diameter of the primary particles constituting the secondary particle is, for example, 0.05 $\mu$m to 1 $\mu$m. The particle diameter of the primary particles is measured as a diameter of a circumscribed circle in a particle image observed with a scanning electron microscope (SEM).

The lithium-transition metal composite oxide may have, for example, a layered structure belonging to the space group R-3m, a layered structure belonging to the space group C2/m, and the like. Among them, the layered structure belonging to the space group R-3m is preferable in terms of the higher capacity, the stability of the crystalline structure, and the like. The layered structure of the lithium-transition metal composite oxide may include a transition metal layer, a Li layer, and an oxygen layer.

The lithium-transition metal composite oxide contains at least: 80 mol% or more of Ni based on the total number of moles of metal elements excluding Li; and Al. The Ni proportion of 80 mol% or more based on the total number of moles of metal elements excluding Li in the lithium-transition metal composite oxide may yield a battery having a high capacity. The Ni proportion based on the total number of moles of the metal elements excluding Li in the lithium-transition metal composite oxide is preferably 90 mol% or more. This proportion may yield a battery having a higher capacity.

The lithium-transition metal composite oxide may be a composite oxide represented by the general formula $Li_aNi_xCo_yAl_zMn_wM1_vO_{2-b}$, wherein $0.95 \leq a \leq 1.05$, $0.8 \leq x \leq 0.96$, $0 \leq y \leq 0.15$, $0 < z \leq 0.10$, $0 \leq w \leq 0.1$, $0 \leq v \leq 0.1$, $0 \leq b \leq 0.05$, $x + y + z + w + v = 1$, and M1 includes at least one element selected from the group consisting of Fe, Ti, Si, Nb, Zr, Mo, and Zn. The positive electrode active material may include a lithium-transition metal composite oxide other than the composite oxide represented by the above general formula or another compound within a range not impairing the object of the present disclosure. The mole fractions of the metal elements contained in the entire particle of the lithium-transition metal composite oxide are measured by inductively coupled plasma (ICP) atomic emission spectroscopy.

The above a, which indicates a proportion of Li in the lithium-transition metal composite oxide, preferably satisfies $0.95 \leq a < 1.05$, and more preferably satisfies $0.97 \leq a \leq 1.03$. If a is less than 0.95, the battery capacity may be lowered compared with the case where a satisfies the above range. If a is 1.05 or more, the charge-discharge cycle characteristics may deteriorate compared with the case where a satisfies the above range.

The above z, which indicates a proportion of Al based on the total number of moles of the metal elements excluding Li in the lithium-transition metal composite oxide, preferably satisfies $0 < z \leq 0.10$, and more preferably satisfies $0.03 \leq z \leq 0.07$. Since an oxidation number of Al does not change during charge and discharge, containing Al in the transition metal layer is considered to stabilize the structure of the transition metal layer. Meanwhile, if z is more than 0.10, an Al impurity may be generated, which lowers the battery capacity. When z is 0.07 or less, the layered structure of the lithium-transition metal composite oxide is likely to be unstable. Thus, the effect of improving charge-discharge cycle characteristics by the surface-modified layer, described later, is remarkable. Al may be, for example, uniformly dispersed in the layered structure of the lithium-transition metal composite oxide, or may be present in part of the layered structure.

Co, Mn, and M1 (M1 represents at least one element selected from the group consisting of Fe, Ti, Si, Nb, Zr, Mo, and Zn) are optional components. The above y, w, and v, which indicate proportions of Co, Mn, and Mi, respectively, based on the total number of moles of the metal elements excluding Li in the lithium-transition metal composite oxide, preferably satisfy $0 < y \leq 0.15$, $0 < w \leq 0.1$, and $0 < v \leq 0.1$, respectively.

The surface-modified layer is formed on surfaces of the primary particles of the lithium-transition metal composite oxide. The surface-modified layer at least contains at least one of the group consisting of Sr and Ca, and W. A synergistic effect of Sr or Ca and W may specifically improve the charge-discharge cycle characteristics and output characteristics of the battery.

The surface-modified layer may include, for example, Sr or a compound containing Sr, or Ca or a compound containing Ca. Examples of the compound containing Sr may include $SrO$ and $SrCO_3$. Examples of the compound containing Ca may include $CaO$ and $CaCO_3$. The surface-modified layer may also include, for example, W or a compound containing W. Examples of the compound containing W may include $WO_3$.

The surface-modified layer may further contain Al. Al included in the surface-modified layer may be, for example, Al or a compound containing Al. Examples of the compound containing Al may include $Al_2O_3$. The compound containing Al may be a compound containing Al and Sr or Ca, and examples thereof may include $SrAlO_4$ and $CaAlO_4$. The surface-modified layer may further contain Li. Examples a compound containing Li may include $Li_2O$, $LiOH$, and $Li_2CO_3$. The compound containing Li may be a compound containing W, and examples thereof may include lithium tungstate.

Contents of Sr and Ca in the surface-modified layer may be, for example, 0.05 mol% to 0.50 mol% based on the total number of moles of the metal elements excluding Li in the lithium-transition metal composite oxide. Within this range, the surface state of the lithium-transition metal composite oxide may be stabilized by an electronic interaction. The presence with W may inhibit the formation of the transformed layer to specifically improve the charge-discharge cycle characteristics of the battery. The content of Sr in the surface-modified layer is preferably 0.05 mol% to 0.30 mol%, and more preferably 0.10 mol% to 0.20 mol%. The content of Ca in the surface-modified layer is preferably 0.10 mol% to 0.50 mol%, and more preferably 0.25 mol% to 0.50 mol%. When the surface-modified layer contains both Sr and Ca, the total content of Sr and Ca is 0.05 mol% to 0.50 mol%.

A content of W in the surface-modified layer is 0.075 mol% or less based on the total number of moles of the metal elements excluding Li in the lithium-transition metal composite oxide. Within this range, the reaction resistance of the battery may be reduced, and the synergistic effect with Ca or Sr may be exhibited. The content of W in the surface-modified layer based on the total number of moles of the metal elements excluding Li in the lithium-transition metal composite oxide is, for example, 0.01 mol% or more, preferably 0.02 mol% or more, and more preferably 0.04 mol% or more. Here, the presence of Sr, Ca, and W in the surface-modified layer may be confirmed by energy dispersive X-ray spectroscopy (TEM-EDX). The contents of Sr, Ca, and W in the surface-modified layer may be measured by analyzing a solution of the lithium-transition metal composite oxide dissolved in a mixed solution of aqua regia and hydrofluoric acid with inductively coupled plasma (ICP) atomic emission spectroscopy.

A thickness of the surface-modified layer is, for example, 0.1 nm or more. This thickness may inhibit the reaction with the electrolyte liquid on the surface of the lithium-transition metal composite oxide. The thickness of the surface-modified layer may be, for example, 5 nm or less.

A content rate of the lithium-transition metal composite oxide in the positive electrode active material is preferably 90 mass% or more, and more preferably 99 mass% or more based on the total mass of the positive electrode active material in terms of, for example, increasing the battery capacity, effectively inhibiting deterioration of the charge-discharge cycle characteristics, and the like.

The positive electrode active material of the present embodiment may include a lithium-transition metal composite oxide other than the lithium-transition metal composite oxide of the present embodiment. Examples of the other lithium-transition metal composite oxide include a lithium-transition metal composite oxide having a Ni content rate of 0 mol% or more and less than 80 mol%.

Next, an example of a method of manufacturing the positive electrode active material including the lithium-transition metal composite oxide and the surface-modified layer will be described.

A method of manufacturing the positive electrode active material comprises, for example: a first step of obtaining a composite oxide including Ni, Al, and an optional metal element; a second step of mixing this composite oxide, a Li compound, and a Sr compound or a Ca compound to obtain a mixture; a third step of calcining this mixture to obtain a calcined product; a fourth step of washing this calcined product with water and then adding a W compound to obtain a W adduct; and a fifth step of heat-treating this W adduct to obtain a positive electrode active material. Parameters of the finally obtained positive electrode active material, such as a composition of the surface-modified layer, may be regulated by, for example, controlling a mixing ratio of the raw materials in the second step and the fourth step, a calcining temperature and time in the third step, a heat-treating temperature and time in the fifth step, and the like.

In the first step, for example, with stirring a solution of metal salts including Ni, Al, and the optional metal element (such as Co, Mn, and Fe), a solution of an alkali such as sodium hydroxide is added dropwise in order to adjust a pH on the alkaline side (for example, 8.5 to 12.5) to precipitate (coprecipitate) a composite hydroxide including Ni, Al, and the optional metal element. The composite hydroxide is calcined to obtain a composite oxide including Ni, Al, and the optional metal element. The calcining temperature is not particularly limited, and for example, within a range of 300°C to 600°C.

In the second step, the composite oxide obtained in the first step, the Li compound, and the Sr compound or the Ca compound are mixed to obtain a mixture. Examples of the Li compound include $Li_2CO_3$, $LiOH$, $Li_2O_2$, $Li_2O$, $LiNO_3$, $LiNO_2$, $Li_2SO_4$, $LiOH \cdot H_2O$, $LiH$, and $LiF$. Examples of the Sr compound include $Sr(OH)_2$, $Sr(OH)_2 \cdot H_2O$, $Sr(OH)_2 \cdot 8H_2O$, $SrO$, $SrCo_3$, $SrSO_4$, and $Sr(NO_3)_2$. Examples of the Ca compound include $Ca(OH)_2$, $CaO$, $CaCO_3$, $CaSO_4$, and $Ca(NO_3)_2$. A particle diameter of the Sr compound or the Ca compound is preferably, for example, 0.1 $\mu$m to 20 $\mu$m. When the Sr compound or the Ca compound includes moisture, the compound may be used after a dehydration treatment such as drying to inhibit water generation during the calcination. A mixing ratio between the composite oxide obtained in the first step and the Li compound is preferably, for example, within a range of 1:0.98 to 1:1.1 of the molar ratio of the metal elements excluding Li:Li in terms of facilitation of regulating each of the above parameters within the above specified range. A mixing ratio between the composite oxide obtained in the first step and at least one of the group consisting of the Sr compound and the Ca compound is preferably, for example, within a range of 1:0.0005 to 1:0.005 of the molar ratio of the metal elements excluding Li:(Sr + Ca) in terms of facilitation of regulating each of the above parameters within the above specified range. In the second step, other metal raw materials may be added as necessary when the composite oxide obtained in the first step, the Li compound, and the Sr compound or the Ca compound are mixed. The other metal raw materials are oxides and the like including metal elements other than the metal elements constituting the composite oxide obtained in the first step.

In the third step, the mixture obtained in the second step is calcined at a predetermined temperature for a predetermined time to obtain a calcined product. The calcination of the mixture in the third step may comprise, for example, a multi-stage calcining step including: a first calcining step of calcining the mixture in a calcination furnace under an oxygen flow to a first set temperature, which is 450°C or higher and 680°C or lower, at a first heating rate; and after the first calcining step, a second calcining step of calcining the calcined product in a calcination furnace under an oxygen flow to a second set temperature, which is higher than 680°C and 800°C or lower, at a second heating rate. Here, the first heating rate is within a range of 1.5°C/min to 5.5°C/min, and the second heating rate, which is lower than the first heating rate, may be set within a range of 0.1°C/min to 3.5°C/min. The first heating rate may be within a range of 0.1°C/min to 5.5°C/min, and may be within a range of 0.2°C/min to 5.5°C/min. Such a multi-stage calcination may regulate parameters such as the composition of the surface-modified layer within the above specified range in the finally obtained positive electrode active material of the present embodiment. It is to be noted that the first heating rate and the second heating rate may be plurally set in each temperature region as long as the heating rates are within the above specified ranges. A holding time at the first set temperature in the first calcining step is preferably 0 hours to 5 hours, and more preferably 0 hours to 3 hours, in terms of regulating each of the above parameters of the lithium-transition metal composite oxide within the above specified range. The holding time at the first set temperature refers to a time of maintaining the first set temperature after the temperature reaches the first set temperature. A holding time at the second set temperature in the second calcining step is preferably 1 hour to 10 hours, and more preferably 1 hour to 5 hours, in terms of regulating each of the above parameters of the lithium-transition metal composite oxide within the above specified range. The holding time at the second set temperature refers to a time of maintaining the second set temperature after the temperature reaches the second set temperature. The calcination of the mixture is performed, for example, in an oxygen flow with an oxygen concentration of 60% or higher, and with a flow rate of the oxygen flow within a range of 0.2 mL/min to 4 mL/min per 10 cm$^3$ of the calcination furnace and 0.3 L/min or more per kilogram of the mixture in terms of regulating each of the above parameters within the above specified range. On surfaces of primary particles of the calcined product after the third step, the Sr compound or the Ca compound is present.

In the fourth step, the W compound or a W-containing solution is added to the calcined product obtained in the third step to obtain a W adduct. First, the calcine product is washed with water. This washing may remove an impurity and the like in the product obtained in the third step. The method of this washing with water may include, for example: mixing the calcined product and water so that a slurry concentration is within a range of 500 g/L to 2000 g/L; then stirring the slurry for 3 minutes to 1 hour; and then filtering the slurry. The Li compound remains in the calcined product after washing with water, and this remaining Li compound is dissolved in water included in the calcined product to generate an alkaline aqueous solution. When the W compound is added to the calcined product, the W compound is dissolved in the alkaline aqueous solution to spread over the entire surface of the calcined product. Examples of the W compound may include tungsten oxide ($WO_3$) and lithium tungstate ($Li_2WO_4$, Li4WOs, and $Li_6W_2O_9$). An amount of W to be added may be 0.075 mol% or less based on the total number of moles of the metal elements excluding Li in the lithium-transition metal composite oxide. When the W-containing solution is added to the calcined product, a W concentration of the W-containing solution is, for example, 0.05 mol/L or more, and preferably 0.1 mol/L to 1 mol/L. The W-containing solution is not particularly limited as long as it contains W, but preferably a solution in which a W compound easily soluble in an alkaline solution, such as tungsten oxide, lithium tungstate, and ammonium tungstate, is dissolved in an aqueous solution of lithium hydroxide.

In the fifth step, the W adduct obtained in the fourth step is heat-treated to produce a positive electrode active material. The heat-treating conditions are not particularly limited, and may be, for example, a heat-treating temperature of 150°C to 400°C and a heat-treating time of 0.5 hours to 15 hours in a vacuum atmosphere. This step may form a surface-modified layer containing at least one of the group consisting of Sr and Ca, and W on the surface of the lithium-transition metal composite oxide.

The mole fractions of the metal elements contained in the positive electrode active material obtained above is measured by inductively coupled plasma (ICP) atomic emission spectroscopy, and may be represented by the general formula $Li_aNi_xCo_yAl_zMn_wM1_vM2_\alpha W_\beta O_{2-b}$, wherein $0.95 \leq a \leq 1.05$, $0.8 \leq x \leq 0.96$, $0 \leq y \leq 0.15$, $0 < z \leq 0.10$, $0 \leq w \leq 0.1$, $0 \leq v \leq 0.1$, $0.0005 \leq \alpha \leq 0.005$, $\beta \leq 0.00075$, $0 \leq b < 0.05$, $x + y + z + w + v = 1$, M1 includes at least one element selected from the group consisting of Fe, Ti, Si, Nb, Zr, Mo, and Zn, and M2 represents at least one element of the group consisting of Sr and Ca. M2 and W do not form a solid solution with the lithium-transition metal composite oxide, but are contained in the surface-modified layer present on the surface of the lithium-transition metal composite oxide. Part of Al may be contained in the surface-modified layer.

[Negative Electrode]

The negative electrode 12 has a negative electrode current collector 40 and a negative electrode mixture layer 41 formed on both surfaces of the negative electrode current collector 40. For the negative electrode current collector 40, a foil of a metal stable within a potential range of the negative electrode 12, such as copper and a copper alloy, a film in which such a metal is disposed on a surface layer thereof, and the like may be used. The negative electrode mixture layer 41 may include a negative electrode active material and a binder. A thickness of the negative electrode mixture layer 41 is, for example, 10 $\mu$m to 150 $\mu$m on one side of the negative electrode current collector 40. The negative electrode 12 may be produced by, for example, applying a negative electrode slurry including the negative electrode active material, the binder, and the like on the surface of the negative electrode current collector 40, drying and subsequently compressing the applied film to form the negative electrode mixture layers 41 on both the surfaces of the negative electrode current collector 40.

The negative electrode active material included in the negative electrode mixture layer 41 is not particularly limited as long as it may reversibly occlude and release lithium ions, and a carbon material such as graphite is typically used. The graphite may be any of: a natural graphite such as flake graphite, massive graphite, and amorphous graphite; and an artificial graphite such as massive artificial graphite and graphitized mesophase-carbon microbead. For the negative electrode active material, a metal to form an alloy with Li, such as Si and Sn, a metal compound including Si, Sn, or the like, a lithium-titanium composite oxide, and the like may be used. A material in which a carbon coating is provided on these materials may also be used. For example, a Si-containing compound represented by $SiO_x$ ($0.5 \leq x \leq 1.6$) or a Si-containing compound in which Si fine particles are dispersed in a lithium silicate phase represented by $Li_{2y}SiO_{(2+y)}$ ($0 < y < 2$) may be used in combination with the graphite.

For the binder included in the negative electrode mixture layer 41, a fluorine-containing resin such as PTFE and PVdF, PAN, a polyimide, an acrylic resin, a polyolefin, and the like may be used similar to that in the positive electrode 11, but styrene-butadiene rubber (SBR) is preferably used. The negative electrode mixture layer 41 may include CMC or a salt thereof, polyacrylic acid (PAA) or a salt thereof, polyvinyl alcohol (PVA), and the like.

[Separator]

For the separator 13, a porous sheet having an ion permeation property and an insulation property is used, for example. Specific examples of the porous sheet include a fine porous thin film, a woven fabric, and a nonwoven fabric. For a material of the separator, a polyolefin such as polyethylene and polypropylene, cellulose, and the like are preferable. The separator 13 may have a single-layered structure, or may have a multilayered structure. On a surface of the separator 13, a resin layer with high heat-resistance, such as an aramid resin, and a filler layer including a filler of an inorganic compound may be provided.

[Non-Aqueous Electrolyte]

The non-aqueous electrolyte includes, for example, a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate, methyl propionate (MP), and ethyl propionate (EP).

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (1 < x < 6, and n represents 1 or 2), $LiB_{10}Cl_{10}$, LiCl, LiBr, LiI, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_lF_{2l+1}SO_2)(C_mF_{2m+1}SO_2)$ {l and m represent integers of 0 or more}. The lithium salts may be used singly, or a plurality types thereof may be mixed to be used. Among them, $LiPF_6$ is preferably used from the viewpoints of ion conductivity, electrochemical stability, and the like. A concentration of the lithium salt is, for example, 0.8 mol to 1.8 mol per litter of the non-aqueous solvent. Furthermore, vinylene carbonate and a propanesultone-based additive may be added.

EXAMPLES

Hereinafter, the present disclosure will be further described with Examples and Comparative Examples, but the present disclosure is not limited to these Examples.

[Production of Positive Electrode Active Material]

<Example 1>

A composite hydroxide obtained by a coprecipitation method and represented by $[Ni_{0.82}Co_{0.13}Al_{0.05}](OH)_2$ was calcined at 500°C for 8 hours to obtain a composite oxide ($Ni_{0.82}Co_{0.13}Al_{0.05}O_2$) (the first step). Then, LiOH, the above composite oxide, and $Sr(OH)_2$ were mixed so that a molar ratio between Li, a total amount of Ni, Co, and Al, and Sr was 1.03:1:0.0008 to obtain a mixture (the second step). This mixture was calcined under an oxygen flow with an oxygen concentration of 95% (a flow rate of 2 mL/min per 10 cm$^3$ and 5 L/min per kilogram of the mixture) from a room temperature to 650°C at a heating rate of 2.0°C/min, and then calcined from 650°C to 780°C at a heating rate of 0.5°C/min to obtain a calcined product (the third step). Water was added to this calcined product so that the slurry concentration was 1500 g/L, the slurry was stirred for 15 minutes and filtered, and then $WO_3$ was added to obtain a W adduct. The amount of $WO_3$ to be added was set so that W was 0.05 mol% based on the total number of moles of the metal elements excluding Li in the W adduct (the fourth step). Furthermore, the W adduct was heat-treated at 300°C for 8 hours to obtain a positive electrode active material of Example 1 (the fifth step). Analysis with an ICP atomic emission spectrometer (product name "iCAP6300," manufactured by Thermo Fisher Scientific K.K.) demonstrated that the above positive electrode active material had a composition of $LiNi_{0.822}Co_{0.127}Al_{0.051}Sr_{0.0008}W_{0.0005}O_2$.

[Production of Positive Electrode]

Mixing 91 parts by mass of the positive electrode active material of Example 1, 7 parts by mass of acetylene black as a conductive agent, and 2 parts by mass of polyvinylidene fluoride as a binder was performed at this ratio, and this mixture was mixed with N-methyl-2-pyrrolidone (NMP) to prepare a positive electrode slurry. Then, this slurry was applied on a positive electrode current collector made of aluminum foil having a thickness of 15 $\mu$m, the applied film was dried, then the applied film was rolled with a roller, and cut to a predetermined electrode size to obtain a positive electrode in which positive electrode mixture layers were formed on both surfaces of a positive electrode core. An exposed part where the surface of the positive electrode core was exposed was provided on part of the positive electrode.

[Production of Negative Electrode]

Natural graphite was used as a negative electrode active material. The negative electrode active material, sodium carboxymethylcellulose (CMC-Na), and styrene-butadiene rubber (SBR) were mixed at a solid-content mass ratio of 100:1:1 in an aqueous solution to prepare a negative electrode slurry. This negative electrode slurry was applied on both surfaces of a negative electrode core made of copper foil, the applied film was dried, then the applied film was rolled by using a roller, and cut to a predetermined electrode size to obtain a negative electrode in which negative electrode mixture layers were formed on both surfaces of the positive electrode core. An exposed part where the surface of the negative electrode core was exposed was provided on part of the negative electrode.

[Preparation of Non-Aqueous Electrolyte]

Ethylene carbonate (EC), methyl ethyl carbonate (MEC), and dimethyl carbonate (DMC) were mixed at a volume ratio of 3:3:4. In this mixed solvent, lithium hexafluorophosphate (LiPF$_6$) was dissolved so that the concentration was 1.2 mol/L to prepare a non-aqueous electrolyte.

[Production of Test Cell]

An aluminum lead was attached to the exposed part of the positive electrode including the positive electrode active material of Example 1, a nickel lead was attached to the exposed part of the above negative electrode, and the positive electrode and the negative electrode were spirally wound with a separator made of a polyolefin interposed therebetween to produce a wound electrode assembly. This electrode assembly was housed in an exterior, the above non-aqueous electrolyte was injected thereinto, and then an opening of the exterior was sealed to obtain a test cell.

[Measurement of Reaction Resistance]

Under a temperature condition at 25°C, the above test cell was charged at a constant current of 0.3 It until a cell voltage reached 4.2 V, and then charged at a constant voltage of 4.2 V until a current value reached 1/50 It. Subsequently, the test cell was discharged at a constant current of 0.5 It until the cell voltage reached 2.5 V. Thereafter, under a temperature condition at 25°C, the test cell was again charged at a constant current of 0.3 It until the test voltage reached 4.2 V, and then charged at a constant voltage of 4.2 V until the current value reached 1/50 It. Then, alternating-current impedance with 20 kHz to 0.01 Hz of the test cell was measured by using an alternating-current impedance measuring device to draw a Nyquist diagram from the measured data, and a reaction resistance was determined from a size of the circular arc between 10 Hz to 0.1 Hz.

[Evaluation of Capacity Maintenance Rate]

The following cycle test was performed on the above test cell. A discharge capacity at the 1st cycle and a discharge capacity at the 100th cycle of the cycle test were determined, and a capacity maintenance rate was calculated with the following formula.

$$\text{Capacity Maintenance Rate (\%)} = (\text{Discharge Capacity at 100th Cycle/Discharge Capacity at 1st Cycle}) \times 100$$

<Cycle Test>

Under a temperature environment of 45°C, the test cell was charged at a constant current of 0.3 It until a battery voltage reached 4.2 V, and charged at a constant voltage of 4.2 V until a current value reached 1/50 It. Then, the test cell was discharged at a constant current of 0.5 It until the battery voltage reached 2.5 V. This charge-discharge cycle was repeated 100 cycles.

<Example 2>

A positive electrode active material was obtained in the same manner as in Example 1 except that: $Sr(OH)_2$ was added in the second step so that Sr was 0.10 mol% based on the total number of moles of Ni, Co, and Al; and $WO_3$ was added in the fourth step so that W was 0.075 mol% based on the total number of moles of the metal elements excluding Li in the W adduct.

<Example 3>

A positive electrode active material was obtained in the same manner as in Example 1 except that $Ca(OH)_2$ was added instead of Sr in the second step so that Ca was 0.50 mol% based on the total number of moles of Ni, Co, and Al.

<Comparative Example 1>

A positive electrode active material was obtained in the same manner as in Example 1 except that: no $Sr(OH)_2$ was added in the second step; and no $WO_3$ was added in the fourth step.

<Comparative Example 2>

A positive electrode active material was obtained in the same manner as in Example 1 except that: no $Sr(OH)_2$ was added in the second step; and $WO_3$ was added in the fourth step so that W was 0.075 mol% based on the total number of moles of the metal elements excluding Li in the W adduct.

<Comparative Example 3>

A positive electrode active material was obtained in the same manner as in Example 1 except that no $WO_3$ was added in the fourth step.

<Comparative Example 4>

A positive electrode active material was obtained in the same manner as in Example 1 except that: $Ca(OH)_2$ was added instead of Sr in the second step so that Ca was 0.25 mol% based on the total number of moles of Ni, Co, and Al; and no $WO_3$ was added in the fourth step.

<Example 4>

A positive electrode active material was obtained in the same manner as in Example 1 except that a composite hydroxide represented by $[Ni_{0.91}Co_{0.05}Al_{0.04}](OH)_2$ was used to obtain a composite oxide $(Ni_{0.91}Co_{0.05}Al_{0.04}O_2)$ in the first step. Analysis with ICP atomic emission spectroscopy demonstrated that the obtained positive electrode active material had a composition of $LiNi_{0.911}Co_{0.050}Al_{0.039}Sr_{0.0008}W_{0.0005}O_2$.

<Example 5>

A positive electrode active material was obtained in the same manner as in Example 4 except that $Sr(OH)_2$ was added in the second step so that Sr was 0.10 mol% based on the total number of moles of Ni, Co, and Al.

<Example 6>

A positive electrode active material was obtained in the same manner as in Example 4 except that: $Sr(OH)_2$ was added in the second step so that Sr was 0.10 mol% based on the total number of moles of Ni, Co, and Al; and $WO_3$ was added in the fourth step so that W was 0.075 mol% based on the total number of moles of the metal elements excluding Li in the W adduct.

<Example 7>

A positive electrode active material was obtained in the same manner as in Example 4 except that: $Ca(OH)_2$

was added instead of Sr in the second step so that Ca was 0.05 mol% based on the total number of moles of Ni, Co, and Al; and WO$_3$ was added in the fourth step so that W was 0.075 mol% based on the total number of moles of the metal elements excluding Li in the W adduct.

<Example 8>

A positive electrode active material was obtained in the same manner as in Example 4 except that: Ca(OH)$_2$ was added instead of Sr in the second step so that Ca was 0.10 mol% based on the total number of moles of Ni, Co, and Al; and WO$_3$ was added in the fourth step so that W was 0.075 mol% based on the total number of moles of the metal elements excluding Li in the W adduct.

<Example 9>

A positive electrode active material was obtained in the same manner as in Example 4 except that Ca(OH)$_2$ was added instead of Sr in the second step so that Ca was 0.25 mol% based on the total number of moles of Ni, Co, and Al.

<Example 10>

A positive electrode active material was obtained in the same manner as in Example 4 except that Ca(OH)$_2$ was added instead of Sr in the second step so that Ca was 0.50 mol% based on the total number of moles of Ni, Co, and Al.

<Example 11>

A positive electrode active material was obtained in the same manner as in Example 4 except that: Ca(OH)$_2$ was added instead of Sr in the second step so that Ca was 0.50 mol% based on the total number of moles of Ni, Co, and Al; and WO$_3$ was added in the fourth step so that W was 0.075 mol% based on the total number of moles of the metal elements excluding Li in the W adduct.

<Comparative Example 5>

A positive electrode active material was obtained in the same manner as in Example 4 except that: no Sr(OH)$_2$ was added in the second step; and no WO$_3$ was added in the fourth step.

<Comparative Example 6>

A positive electrode active material was obtained in the same manner as in Example 4 except that: no Sr(OH)$_2$ was added in the second step; and WO$_3$ was added in the fourth step so that W was 0.075 mol% based on the total number of moles of the metal elements excluding Li in the W adduct.

<Comparative Example 7>

A positive electrode active material was obtained in the same manner as in Example 4 except that no WO$_3$ was added in the fourth step.

<Comparative Example 8>

A positive electrode active material was obtained in the same manner as in Example 4 except that: Ca(OH)$_2$ was added instead of Sr in the second step so that Ca was 0.25 mol% based on the total number of moles of Ni, Co, and Al; and no WO$_3$ was added in the fourth step.

<Comparative Example 9>

A positive electrode active material was obtained in the same manner as in Example 4 except that: Sr(OH)$_2$ was added in the second step so that Sr was 0.10 mol% based on the total number of moles of Ni, Co, and Al; and WO$_3$ was added in the fourth step so that W was 0.080 mol% based on the total number of moles of the metal elements excluding Li in the W adduct.

<Comparative Example 10>

A positive electrode active material was obtained in the same manner as in Example 4 except that: $Ca(OH)_2$ was added instead of Sr in the second step so that Ca was 0.50 mol% based on the total number of moles of Ni, Co, and Al; and $WO_3$ was added in the fourth step so that W was 0.080 mol% based on the total number of moles of the metal elements excluding Li in the W adduct.

<Example 12>

A positive electrode active material was obtained in the same manner as in Example 1 except that: a composite hydroxide represented by $[Ni_{0.925}Al_{0.05}Mn_{0.025}](OH)_2$ was used to obtain a composite oxide $(Ni_{0.925}Al_{0.05}Mn_{0.025}O_2)$ in the first step; $Sr(OH)_2$ was added in the second step so that Sr was 0.10 mol% based on the total number of moles of Ni, Al, and Mn; and $WO_3$ was added in the fourth step so that W was 0.020 mol% based on the total number of moles of the metal elements excluding Li in the W adduct. Analysis with ICP atomic emission spectroscopy demonstrated that the obtained positive electrode active material had a composition of $LiNi_{0.925}Al_{0.054}Mn_{0.021}Sr_{0.0010}W_{0.0002}O_2$.

<Example 13>

A positive electrode active material was obtained in the same manner as in Example 12 except that: $Sr(OH)_2$ was added in the second step so that Sr was 0.15 mol% based on the total number of moles of Ni, Al, and Mn; and $WO_3$ was added in the fourth step so that W was 0.040 mol% based on the total number of moles of the metal elements excluding Li in the W adduct.

<Example 14>

A positive electrode active material was obtained in the same manner as in Example 12 except that $WO_3$ was added in the fourth step so that W was 0.075 mol% based on the total number of moles of the metal elements excluding Li in the W adduct.

<Comparative Example 11>

A positive electrode active material was obtained in the same manner as in Example 12 except that: no $Sr(OH)_2$ was added in the second step; and no $WO_3$ was added in the fourth step.

<Comparative Example 12>

A positive electrode active material was obtained in the same manner as in Example 12 except that: no $Sr(OH)_2$ was added in the second step; and $WO_3$ was added in the fourth step so that W was 0.050 mol% based on the total number of moles of the metal elements excluding Li in the W adduct.

<Comparative Example 13>

A positive electrode active material was obtained in the same manner as in Example 12 except that: $Sr(OH)_2$ was added in the second step so that Sr was 0.08 mol% based on the total number of moles of Ni, Al, and Mn; and no $WO_3$ was added in the fourth step.

<Comparative Example 14>

A positive electrode active material was obtained in the same manner as in Example 12 except that: $Sr(OH)_2$ was added in the second step so that Sr was 0.20 mol% based on the total number of moles of Ni, Al, and Mn; and $WO_3$ was added in the fourth step so that W was 0.080 mol% based on the total number of moles of the metal elements excluding Li in the W adduct.

<Example 15>

A positive electrode active material was obtained in the same manner as in Example 1 except that a composite hydroxide represented by $[Ni_{0.94}Al_{0.06}](OH)_2$ was used to obtain a composite oxide $(Ni_{0.94}Al_{0.06}O_2)$ in the first step. Analysis with ICP atomic emission spectroscopy demonstrated that the obtained positive electrode active material had a composition of $LiNi_{0.939}Al_{0.061}Sr_{0.0008}W_{0.0005}O_2$.

<Example 16>

A positive electrode active material was obtained in the same manner as in Example 15 except that: $Sr(OH)_2$ was added in the second step so that Sr was 0.10 mol% based on the total number of moles of Ni and Al; and $WO_3$ was added in the fourth step so that W was 0.075 mol% based on the total number of moles of the metal elements excluding Li in the W adduct.

<Example 17>

A positive electrode active material was obtained in the same manner as in Example 15 except that $Ca(OH)_2$ was added instead of Sr in the second step so that Ca was 0.50 mol% based on the total number of moles of Ni and Al.

<Comparative Example 15>

A positive electrode active material was obtained in the same manner as in Example 15 except that: no $Sr(OH)_2$ was added in the second step; and no $WO_3$ was added in the fourth step.

<Comparative Example 16>

A positive electrode active material was obtained in the same manner as in Example 15 except that: no $Sr(OH)_2$ was added in the second step; and $WO_3$ was added in the fourth step so that W was 0.075 mol% based on the total number of moles of the metal elements excluding Li in the W adduct.

<Comparative Example 17>

A positive electrode active material was obtained in the same manner as in Example 15 except that no $WO_3$ was added in the fourth step.

<Comparative Example 18>

A positive electrode active material was obtained in the same manner as in Example 15 except that: $Ca(OH)_2$ was added instead of Sr in the second step so that Ca was 0.25 mol% based on the total number of moles of Ni and Al; and no $WO_3$ was added in the fourth step.

<Reference Example 1>

A positive electrode active material was obtained in the same manner as in Example 1 except that a composite hydroxide represented by $[Ni_{0.595}Co_{0.21}Mn_{0.195}](OH)_2$ was used to obtain a composite oxide ($Ni_{0.595}Co_{0.21}Mn_{0.195}O_2$); no $Sr(OH)_2$ was added in the second step; and no $WO_3$ was added in the fourth step. Analysis with ICP atomic emission spectroscopy demonstrated that the obtained positive electrode active material had a composition of $LiNi_{0.594}Co_{0.211}Mn_{0.195}O_2$.

<Reference Example 2>

A positive electrode active material was obtained in the same manner as in Reference Example 1 except that $WO_3$ was added in the fourth step so that W was 0.050 mol% based on the total number of moles of the metal elements excluding Li in the W adduct.

<Reference Example 3>

A positive electrode active material was obtained in the same manner as in Reference Example 1 except that: $Sr(OH)_2$ was added in the second step so that Sr was 0.10 mol% based on the total number of moles of Ni, Co, and Mn; and $WO_3$ was added in the fourth step so that W was 0.075 mol% based on the total number of moles of the metal elements excluding Li in the W adduct.

<Reference Example 4>

A positive electrode active material was obtained in the same manner as in Reference Example 1 except that: $Ca(OH)_2$ was added in the second step so that Ca was 0.50 mol% based on the total number of moles of Ni, Co, and Mn; and $WO_3$ was added in the fourth step so that W was 0.050 mol% based on the total number of moles of the metal elements excluding Li in the W adduct.

The reaction resistance and capacity maintenance rate in the Examples, the Comparative Examples, and the Reference Examples are separately shown in Tables 1 to 5. Tables 1 to 5 also show the results of the ICP atomic emission spectroscopy analysis of the obtained positive electrode active materials. The reaction resistance and capacity maintenance rate of the test cells of Examples 1 to 3 and Comparative Examples 2 to 4 shown in Table 1 are shown relative to the reaction resistance and capacity maintenance rate of the test cell of Comparative Example 1 being 100.

The reaction resistance and capacity maintenance rate of the test cells of Examples 4 to 11 and Comparative Examples 6 to 10 shown in Table 2 are shown relative to the reaction resistance and capacity maintenance rate of the test cell of Comparative Example 5 being 100.

The reaction resistance and capacity maintenance rate of the test cells of Examples 12 to 14 and Comparative Examples 12 to 14 shown in Table 3 are shown relative to the reaction resistance and capacity maintenance rate of the test cell of Comparative Example 11 being 100.

The reaction resistance and capacity maintenance rate of the test cells of Examples 15 to 17 and Comparative Examples 16 to 18 shown in Table 4 are shown relative to the reaction resistance and capacity maintenance rate of the test cell of Comparative Example 15 being 100.

The reaction resistance and capacity maintenance rate of the test cells of Reference Examples 2 to 4 shown in Table 5 are shown relative to the reaction resistance and capacity maintenance rate of the test cell of Reference Example 1 being 100.

[Table 1]

| | Positive electrode active material | | | | | | | Measurement results | |
| | Surface-modified layer | | | Lithium-transition metal composite oxide | | | | | |
| | Sr [mol%] | Ca [mol%] | W [mol%] | Ni [mol%] | Co [mol%] | Al [mol%] | Mn [mol%] | Capacity maintenance rate | Reaction resistance |
|---|---|---|---|---|---|---|---|---|---|
| Example 1 | 0.08 | 0 | 0.050 | 82.2 | 12.7 | 5.1 | 0 | 109 | 64 |
| Example 2 | 0.10 | 0 | 0.075 | 82.1 | 12.8 | 5.1 | 0 | 111 | 62 |
| Example 3 | 0 | 0.50 | 0.050 | 82.1 | 12.8 | 5.1 | 0 | 110 | 56 |
| Comparative Example 1 | 0 | 0 | 0 | 82.2 | 12.7 | 5.1 | 0 | 100 | 100 |
| Comparative Example 2 | 0 | 0 | 0.075 | 82.2 | 12.7 | 5.1 | 0 | 101 | 80 |
| Comparative Example 3 | 0.08 | 0 | 0 | 82.1 | 12.8 | 5.1 | 0 | 102 | 93 |
| Comparative Example 4 | 0 | 0.25 | 0 | 82.1 | 12.8 | 5.1 | 0 | 103 | 91 |

[Table 2]

| | Positive electrode active material | | | | | | | Measurement results | |
|---|---|---|---|---|---|---|---|---|---|
| | Surface-modified layer | | | Lithium-transition metal composite oxide | | | | Capacity maintenance rate | Reaction resistance |
| | Sr [mol%] | Ca [mol%] | W [mol%] | Ni [mol%] | Co [mol%] | Al [mol%] | Mn [mol%] | | |
| Example 4 | 0.08 | 0 | 0.050 | 91.1 | 5.0 | 3.9 | 0 | 112 | 60 |
| Example 5 | 0.10 | 0 | 0.050 | 91.0 | 5.0 | 4.0 | 0 | 114 | 59 |
| Example 6 | 0.10 | 0 | 0.075 | 90.9 | 5.0 | 4.1 | 0 | 115 | 53 |
| Example 7 | 0 | 0.05 | 0.075 | 91.0 | 5.0 | 4.0 | 0 | 107 | 68 |
| Example 8 | 0 | 0.10 | 0.075 | 90.9 | 5.0 | 4.1 | 0 | 108 | 64 |
| Example 9 | 0 | 0.25 | 0.050 | 91.1 | 5.0 | 3.9 | 0 | 109 | 62 |
| Example 10 | 0 | 0.50 | 0.050 | 91.0 | 5.0 | 4.0 | 0 | 112 | 59 |
| Example 11 | 0 | 0.50 | 0.075 | 90.9 | 5.0 | 4.1 | 0 | 115 | 51 |
| Comparative Example 5 | 0 | 0 | 0 | 91.0 | 5.0 | 4.0 | 0 | 100 | 100 |
| Comparative Example 6 | 0 | 0 | 0.075 | 91.0 | 4.9 | 4.1 | 0 | 100 | 79 |
| Comparative Example 7 | 0.08 | 0 | 0 | 91.1 | 5.0 | 3.9 | 0 | 106 | 98 |
| Comparative Example 8 | 0 | 0.25 | 0 | 91.1 | 5.0 | 3.9 | 0 | 106 | 98 |
| Comparative Example 9 | 0.10 | 0 | 0.080 | 91.0 | 5.0 | 4.0 | 0 | 109 | 104 |
| Comparative Example 10 | 0 | 0.50 | 0.080 | 91.0 | 5.0 | 4.0 | 0 | 109 | 96 |

[Table 3]

| | Positive electrode active material | | | | | | | Measurement results | |
|---|---|---|---|---|---|---|---|---|---|
| | Surface-modified layer | | | Lithium-transition metal composite oxide | | | | Capacity maintenance rate | Reaction resistance |
| | Sr [mol%] | Ca [mol%] | W [mol%] | Ni [mol%] | Co [mol%] | Al [mol%] | Mn [mol%] | | |
| Example 12 | 0.10 | 0 | 0.020 | 92.5 | 0 | 5.4 | 2.1 | 112 | 64 |
| Example 13 | 0.15 | 0 | 0.040 | 92.4 | 0 | 5.3 | 2.3 | 115 | 58 |
| Example 14 | 0.10 | 0 | 0.075 | 92.5 | 0 | 5.3 | 2.2 | 116 | 56 |
| Comparative Example 11 | 0 | 0 | 0.000 | 92.5 | 0 | 5.4 | 2.1 | 100 | 100 |
| Comparative Example 12 | 0 | 0 | 0.050 | 92.5 | 0 | 5.4 | 2.1 | 102 | 82 |
| Comparative Example 13 | 0.08 | 0 | 0.000 | 92.4 | 0 | 5.3 | 2.3 | 107 | 96 |
| Comparative Example 14 | 0.20 | 0 | 0.080 | 92.5 | 0 | 5.4 | 2.1 | 111 | 105 |

[Table 4]

| | Positive electrode active material | | | | | | | Measurement results | |
|---|---|---|---|---|---|---|---|---|---|
| | Surface-modified layer | | | Lithium-transition metal composite oxide | | | | Capacity maintenance rate | Reaction resistance |
| | Sr [mol%] | Ca [mol%] | W [mol%] | Ni [mol%] | Co [mol%] | Al [mol%] | Mn [mol%] | | |
| Example 15 | 0.08 | 0 | 0.050 | 93.9 | 0 | 6.1 | 0 | 113 | 62 |
| Example 16 | 0.10 | 0 | 0.075 | 93.9 | 0 | 6.1 | 0 | 116 | 55 |
| Example 17 | 0 | 0.50 | 0.050 | 94.0 | 0 | 6.0 | 0 | 116 | 59 |
| Comparative Example 15 | 0 | 0 | 0 | 94.0 | 0 | 6.0 | 0 | 100 | 100 |
| Comparative Example 16 | 0 | 0 | 0.075 | 94.1 | 0 | 5.9 | 0 | 101 | 83 |
| Comparative Example 17 | 0.08 | 0 | 0 | 94.0 | 0 | 6.0 | 0 | 106 | 95 |
| Comparative Example 18 | 0 | 0.25 | 0 | 94.1 | 0 | 5.9 | 0 | 107 | 93 |

[Table 5]

| | Positive electrode active material | | | | | | | Measurement results | |
|---|---|---|---|---|---|---|---|---|---|
| | Surface-modified layer | | | Lithium-transition metal composite oxide | | | | Capacity maintenance rate | Reaction resistance |
| | Sr [mol%] | Ca [mol%] | W [mol%] | Ni [mol%] | Co [mol%] | Al [mol%] | Mn [mol%] | | |
| Reference Example 1 | 0 | 0 | 0 | 59.4 | 21.1 | 0 | 19.5 | 100 | 97 |
| Reference Example 2 | 0 | 0 | 0.050 | 59.5 | 21.0 | 0 | 19.5 | 101 | 100 |
| Reference Example 3 | 0.10 | 0 | 0.075 | 59.5 | 21.0 | 0 | 19.5 | 101 | 99 |
| Reference Example 4 | 0 | 0.50 | 0.050 | 59.4 | 21.0 | 0 | 19.6 | 102 | 98 |

In any of Tables 1 to 4, the Examples exhibited a lower reaction resistance and a higher capacity maintenance rate than the Comparative Examples. In Table 5, since none of the lithium-transition metal composite oxides of Reference Examples 1 to 4 contained 80% or more of Ni nor contained Al, Reference Examples 1 to 4 exhibited no change in the reaction resistance and the capacity maintenance rate even with the surface-modified layer including the predetermined amounts of Sr or Ca and W.

REFERENCE SINGS LIST

10 Non-aqueous electrolyte secondary battery
11 Positive electrode
12 Negative electrode
13 Separator
14 Electrode assembly
15 Battery case
16 Exterior housing can
17 Sealing assembly
18, 19 Insulating plate
20 Positive electrode tab
21 Negative electrode tab
22 Groove
23 Bottom plate
24 Lower vent member
25 Insulating member
26 Upper vent member
27 Cap
28 Gasket
30 Positive electrode current collector
31 Positive electrode mixture layer
40 Negative electrode current collector
41 Negative electrode mixture layer

**Claims**

1. A positive electrode active material for a non-aqueous electrolyte secondary battery, including:

   a lithium-transition metal composite oxide having secondary particles formed by aggregation of primary particles; and
   a surface-modified layer formed on surfaces of the primary particles of the lithium-transition metal composite oxide, wherein
   the lithium-transition metal composite oxide contains at least: 80 mol% or more of Ni based on a total number of moles of metal elements excluding Li; and Al,
   the surface-modified layer contains at least one of the group consisting of Sr and Ca, and W, and
   a content of W in the surface-modified layer is 0.075 mol% or less based on the total number of moles of the metal elements excluding Li in the lithium-transition metal composite oxide.

2. The positive electrode active material for a non-aqueous electrolyte secondary battery according to claim 1, wherein the surface-modified layer further contains Al.

3. The positive electrode active material for a non-aqueous electrolyte secondary battery according to claim 1 or 2, wherein contents of Sr and Ca in the surface-modified layer are 0.05 mol% to 0.50 mol% based on the total number of moles of the metal elements excluding Li in the lithium-transition metal composite oxide.

4. A non-aqueous electrolyte secondary battery, comprising:

   a positive electrode including the positive electrode active material for a non-aqueous electrolyte secondary battery according to any one of claims 1 to 3;
a negative electrode; and
a non-aqueous electrolyte.

Figure 1

## INTERNATIONAL SEARCH REPORT

International application No.

**PCT/JP2021/015956**

| A. | CLASSIFICATION OF SUBJECT MATTER |
|---|---|

*C01G 53/00*(2006.01)i; *H01M 4/36*(2006.01)i; *H01M 4/525*(2010.01)i
FI: H01M4/525; H01M4/36 C; C01G53/00 A

According to International Patent Classification (IPC) or to both national classification and IPC

| B. | FIELDS SEARCHED |
|---|---|

Minimum documentation searched (classification system followed by classification symbols)

C01G53/00; H01M4/36; H01M4/525

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2012-252807 A (TOYOTA MOTOR CORP.) 20 December 2012 (2012-12-20) claims 1-4, paragraph [0008] | 1-4 |
| A | WO 2012/035664 A1 (TOYOTA MOTOR CORP.) 22 March 2012 (2012-03-22) claims 1-5 | 1-4 |
| A | JP 2006-351378 A (MATSUSHITA ELECTRIC INDUSTRIAL CO., LTD.) 28 December 2006 (2006-12-28) paragraphs [0060]-[0108], examples A17, A18, A31 of table 1A, examples B17, B18, B31 of table 2A, examples C17, C18, C31 of table 3A | 1-4 |
| A | CN 110931738 A (GUANGDONG BRUNP RECYCLING TECHNOLOGY CO., LTD.) 27 March 2020 (2020-03-27) paragraphs [0046]-[0052], example 3 | 1-4 |
| A | CN 109244411 A (SOUNDON NEW ENERGY TECHNOLOGY CO., LTD.) 18 January 2019 (2019-01-18) claims 1-10 | 1-4 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 June 2021** | **06 July 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/015956**

**C. DOCUMENTS CONSIDERED TO BE RELEVANT**

| Category* | Citation of document, with indication, where appropriate, of the relevant passages | Relevant to claim No. |
|---|---|---|
| A | CN 108878990 A (HENAN NORMAL UNIVERSITY) 23 November 2018 (2018-11-23) paragraphs [0027]-[0037], example 2 | 1-4 |

Form PCT/ISA/210 (second sheet) (January 2015)

## INTERNATIONAL SEARCH REPORT
### Information on patent family members

| International application No. |
| --- |
| **PCT/JP2021/015956** |

| Patent document cited in search report | | | Publication date (day/month/year) | Patent family member(s) | Publication date (day/month/year) |
| --- | --- | --- | --- | --- | --- |
| JP | 2012-252807 | A | 20 December 2012 | (Family: none) | |
| WO | 2012/035664 | A1 | 22 March 2012 | US 2013/0177809 A1 claims 1-5 CN 103098268 A KR 10-2013-0061745 A | |
| JP | 2006-351378 | A | 28 December 2006 | US 2009/0081548 A1 paragraphs [0088]-[0146], examples A17, A18, A31, B17, B18, B31, C17, C18, C31, tables 1A, 2A, 3A WO 2006/134851 A1 CN 101199065 A KR 10-2008-0015034 A | |
| CN | 110931738 | A | 27 March 2020 | (Family: none) | |
| CN | 109244411 | A | 18 January 2019 | (Family: none) | |
| CN | 108878990 | A | 23 November 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2016225275 A